# EUROPEAN PATENT SPECIFICATION

(11) **EP 4 001 190 B1**
(45) Date of publication and mention of the grant of the patent: **27.09.2023**
(21) Application number: 20208424.0
(22) Date of filing: 18.11.2020
(51) Int. Cl.: B65G 47/96, B07C 3/08, B07C 5/36, B65G 47/71

(54) **A SORTING SYSTEM FOR SORTING ARTICLES AND A METHOD OF OPERATING THE SORTING SYSTEM**
SORTIERSYSTEM ZUM SORTIEREN VON ARTIKELN UND VERFAHREN ZUM BETREIBEN DES SORTIERSYSTEMS
SYSTÈME DE TRI POUR TRIER DES ARTICLES ET PROCÉDÉ DE FONCTIONNEMENT DU SYSTÈME DE TRI

(43) Date of publication of application: 25.05.2022
(73) Proprietor: Eurosort B.V., 1243 HV 's-Graveland (NL)
(72) Inventor: Strating, Wouter Simon, 3443 BW Woerden (NL); Van Haaster, Patrick Theodorus Johannes, 2191 AS De Zilk (NL)
(74) Representative: De Vries & Metman

(56) References cited:
- WO-A1-2017/123625
- IT-A1- UB20 151 783
- KR-A- 20200 078 780

## Description

The present invention relates to a sorting system for sorting articles.

Several types of sorting systems are known in the prior art. Usually a sorting system comprises a plurality of sorter units which are driven behind each other along a loop-shaped path. Articles are put on the sorter units at an input and selectively removed from the sorter units at an output. The sorter units may be provided with respective pushers, cross-belts, or the like so as to selectively remove articles at an output. The output may have a plurality of collecting units for receiving the removed articles.

Patent application IT UB20 151 783 A1 describes a sorter system comprising two overlapping sorter units to allow high parcels flows.

An object of the invention is to provide a sorting system, which provides a high sorting efficiency.

This object is accomplished with the sorting system according to claim 1.

An advantage of the sorting system according to the invention is that both the lower and upper sorters can be used efficiently due to the opportunity of applying a high rate of occupation of the lower and upper sorter units along the lower and upper paths. The sorting system provides the opportunity to function as follows. A first series of articles to be sorted can be supplied to the lower sorter units at the first lower input, wherein a part of the first series of articles is removed from the lower sorter units at the first lower output whereas a remainder of the first series of articles is removed from the lower sorter units at the second lower output upon passing the second lower input. A second series of articles to be sorted can be supplied to the lower sorter units at the second lower input, i.e. to the lower sorter units which arrive emptied at the second lower input. The second series of articles to be sorted are pre-sorted by the pre-sorter, hence substantially all articles of the second series of articles are removed from the lower sorter units at the second lower output. This means that the lower sorter units are used efficiently by loading a part of them twice per loop along the lower path. Due to this manner of operation the number of articles that is removed at the second lower output is larger than the number of articles that is removed at the first lower output. This asymmetric distribution can be compensated by the upper sorter in the following way. A third series of articles to be sorted can be supplied to the upper sorter units at the first upper input, wherein a part of the third series of articles is removed from the upper sorter units at the first upper output, whereas a remainder of the first series of articles is removed from the upper sorter units at the second upper output. A fourth series of articles to be sorted can be supplied to the upper sorter units at the second upper input, i.e. to the upper sorter units which arrive emptied at the second upper input. The fourth series of articles to be sorted are pre-sorted by the pre-sorter, hence substantially all articles of the fourth series of articles are removed from the upper sorter units at the second upper output. This means that the upper sorter units are also used efficiently by loading a part of them twice per loop along the upper path. The number of articles that is removed at the second upper output is larger than the number of articles that is removed at the first upper output, but since the second lower output is located at the first upper output and the first lower output is located at the second upper output, an even distribution of removed articles can be achieved at the combination of the second lower output and the first upper output, on the one hand, and the combination of the first lower output and the second upper output, on the other hand, whereas the lower and upper sorter units are used efficiently. In total, this leads to a high sorting efficiency of the sorting system according to the invention.

It is noted that the second lower output and the first upper output may form a common first output station whereas the first lower output and the second upper output may form a common second output station.

In a particular embodiment the upper transport direction is opposite to the lower transport direction. This means that the first lower and upper inputs lie at one side of the combination of the second lower output and the first upper output and the combination of the first lower output and the second upper output, whereas the second lower and upper inputs lie at an opposite side of the combination of the second lower output and the first upper output and the combination of the first lower output and the second upper output. This arrangement provides the opportunity to apply the sorting system in a warehouse where one article flow is supplied to the first lower and upper inputs without pre-sorting the articles, whereas another pre-sorted article flow is supplied to the second lower and upper inputs.

The first upper and lower inputs may be located at substantially the same location along the upper and lower paths, and/or the second upper and lower inputs may be located at substantially the same location along the upper and lower paths.

In a practical embodiment the sorting system has four sections as seen from above: a first input section including the first lower and upper inputs, a second input section including the second lower and upper inputs, a first output section including the first lower output and the second upper output, a second output section including the second lower output and the first upper output, wherein the first input section, the first output section, the second input section and the second output section are successively located behind each other in circumferential direction.

More specifically, the four sections may form four sides of a rectangle. In this case the short sides of the rectangle may comprise the first lower and upper inputs and the second lower and upper inputs, respectively, whereas the long sides may comprise the combination of the second lower output and the first upper output and the combination of the first lower output and the second upper output, respectively.

The first lower output and the second upper output and/or the second lower output and the first upper output may be provided with discharge guides, preferably inclined chutes, for guiding articles that are removed from the lower and upper sorter units, respectively; for example, for guiding articles towards collecting containers.

The number of discharge guides of the first lower output, the second lower output, the first upper output and the second upper output may be substantially equal.

In a particular embodiment the discharge guides extend in transverse direction of the lower and upper paths, respectively, at at least one side of the lower and upper paths, wherein the discharge guides cooperating with the lower path and the discharge guides cooperating with the upper path are located alternatingly behind each other along the lower and upper paths. In case of inclined discharge guides, the discharge guides cooperating with the lower path may have a smaller angle with the horizontal than the discharge guides cooperating with the upper path.

The invention is also related to a method of operating the sorting system as described hereinbefore, wherein a first series of articles to be sorted is supplied to the lower sorter units at the first lower input, wherein a part of the first series of articles is removed from the lower sorter units at the first lower output and substantially a remainder of the first series of articles is removed from the lower sorter units at the second lower output, wherein a second series of articles to be sorted is supplied to empty lower sorter units at the second lower input, wherein substantially all articles of the second series of articles are removed from the lower sorter units at the second lower output, wherein a third series of articles to be sorted is supplied to the upper sorter units at the first upper input, wherein a part of the third series of articles is removed from the upper sorter units at the first upper output and substantially a remainder of the third series of articles is removed from the upper sorter units at the second upper output, wherein a fourth series of articles to be sorted is supplied to empty upper sorter units at the second upper input, wherein substantially all articles of the fourth series of articles are removed from the upper sorter units at the second upper output. The second and fourth series of articles are pre-sorted by the pre-sorter in order to have them discharged at the second lower and upper outputs only, respectively.

Preferably, all articles of the second series of articles are removed from the lower sorter units at the second lower output and all articles of the fourth series of articles are removed from the upper sorter units at the second upper output, but it may occur in practice that an article remains on a lower sorter unit or an upper sorter unit without being removed such that it may follow a next loop. Similarly, preferably the remainder of the first series of articles is removed from the lower sorter units at the second lower output and the remainder of the third series of articles is removed from the upper sorter units at the second upper output.

The part of the first series of articles which is removed from the lower sorter units at the first lower output may be about a half of the first series and the part of the third series of articles which is removed from the upper sorter units at the first upper output may be about a half of the third series.

The invention will hereafter be elucidated with reference to very schematic drawings showing embodiments of the invention by way of example.
Fig. 1 is a top view of an embodiment of the sorting system according to the invention.
Fig. 2 is a similar view as Fig. 1, showing an upper sorter without a lower sorter of the sorting system.
Fig. 3 is a similar view as Fig. 2, but showing the lower sorter without the upper sorter.
Fig. 4 is an enlarged view of a part of Fig. 1, indicated by IV in Fig. 1.
Fig. 5 is a schematic top view of an alternative embodiment of the lower and upper sorters of the sorting system according to the invention, illustrating the functioning of the sorting system.
Fig. 6 is a perspective view of a part of the sorting system as shown in Fig. 1.

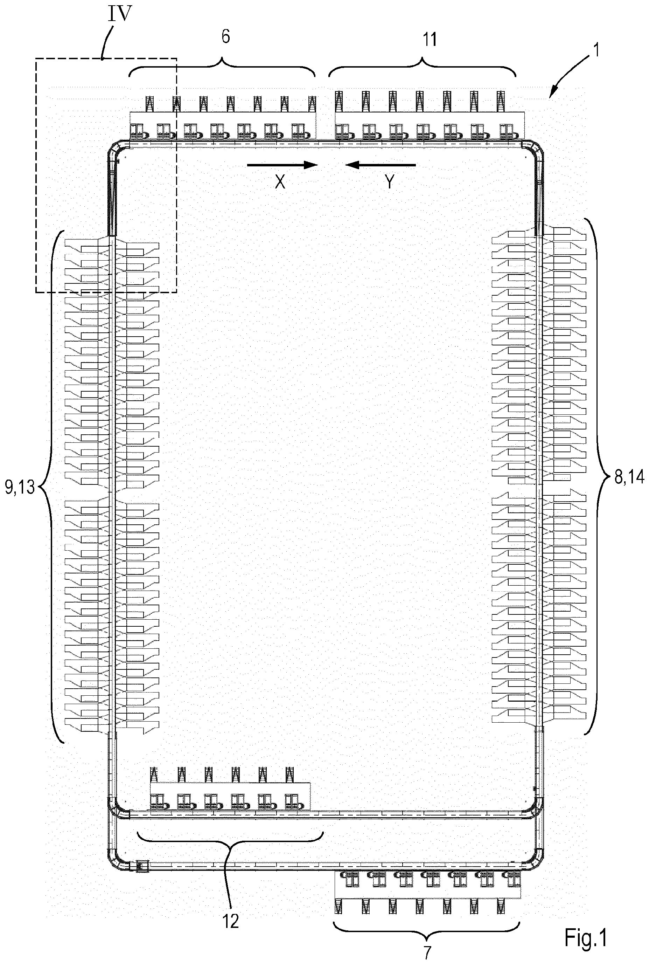

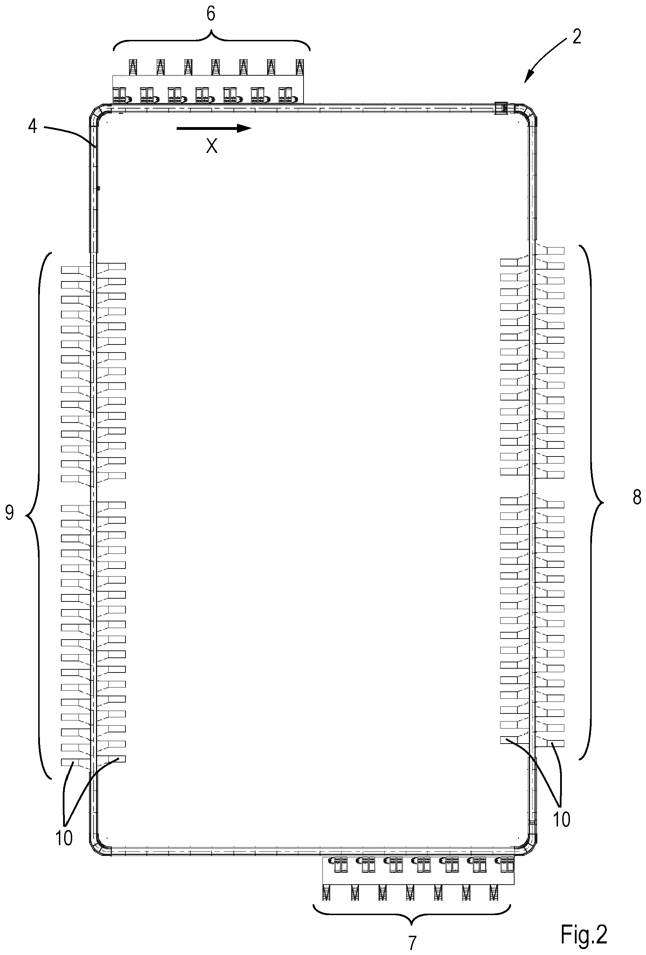

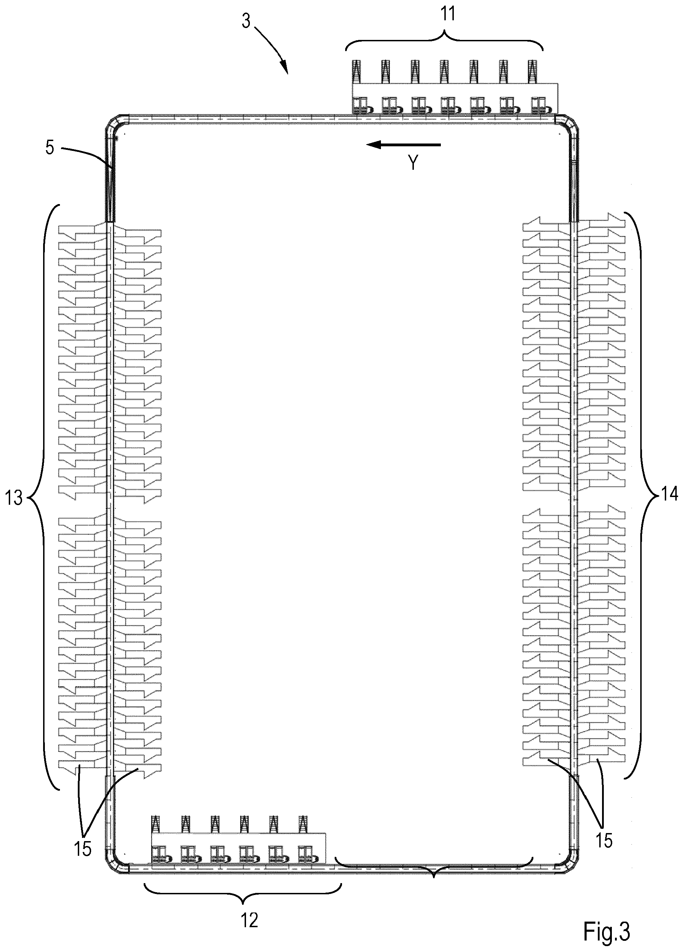

Fig. 1 shows an embodiment of a sorting system 1 according to the invention, as seen from above. The sorting system 1 comprises a lower sorter 2 which is shown, as seen from above, in Fig. 2, and an upper sorter 3 which is shown, as seen from above, in Fig. 3. The lower sorter 2 has a plurality of lower sorter units 4 for supporting articles; the lower sorter units 4 are drivable along a loop-shaped lower path in a lower transport direction X, in this case clockwise as seen from above. The upper sorter 3 has a plurality of upper sorter units 5 for supporting articles; the upper sorter units 5 are drivable along a loop-shaped upper path in an upper transport direction Y, in this case anti-clockwise as seen from above. Hence, the lower transport direction X is opposite to the upper transport direction Y. Furthermore, the upper sorter 3 extends above the lower sorter 2, i.e. the upper path extends above the lower path. The loop shapes of the upper and lower paths are rectangular, but alternative shapes are conceivable.

The lower sorter units 4 may be similar to the upper sorter units 5. The lower and/or upper sorter units 4, 5 may comprise interconnected trays including respective pushers for removing articles from the trays in lateral direction or cross-belts or the like. In the embodiment as shown in Fig. 1 the articles can be removed from the upper and lower sorter units 4, 5 at either sides of the upper path and lower path, respectively.

Referring to Fig. 2, the lower sorter 2 is provided with a first lower input 6 and a second lower input 7 where articles are supplied to the lower sorter units 4 under operating conditions. The first and second lower inputs 6, 7 are located at a distance from each other along the lower path. In this case the first and second lower inputs 6, 7 are located opposite to each other along short sides of the rectangular lower path. The lower sorter 2 is also provided with a first lower output 8 and a second lower output 9 where articles are selectively removable from the lower sorter units 4. The first lower output 8 is located downstream of the first lower input 6 and upstream of the second lower input 7. The second lower output 9 is located downstream of the second lower input 7 and upstream of the first lower input 6. The first and second lower outputs 8, 9 are provided with a plurality of inclined lower chutes 10 for guiding articles that are removed from the lower sorter units 4 to respective collecting locations.

The upper sorter 3 is quite similar to the lower sorter 2. The upper sorter 3 is provided with a first upper input 11 and a second upper input 12 where articles are supplied to the upper sorter units 5 under operating conditions. The first and second upper inputs 11, 12 are located at a distance from each other along the upper path. In this case the first and second upper inputs 11, 12 are located opposite to each other along the short sides of the rectangular upper path. The upper sorter 3 is also provided with a first upper output 13 and a second upper output 14 where articles are selectively removable from the upper sorter units 5. The first upper output 13 is located downstream of the first upper input 11 and upstream of the second upper input 12. The second upper output 14 is located downstream of the second upper input 12 and upstream of the first upper input 11. The first and second upper outputs 13, 14 are provided with a plurality of inclined upper chutes 15 for guiding articles that are removed from the upper sorter units 5 to respective collecting locations.

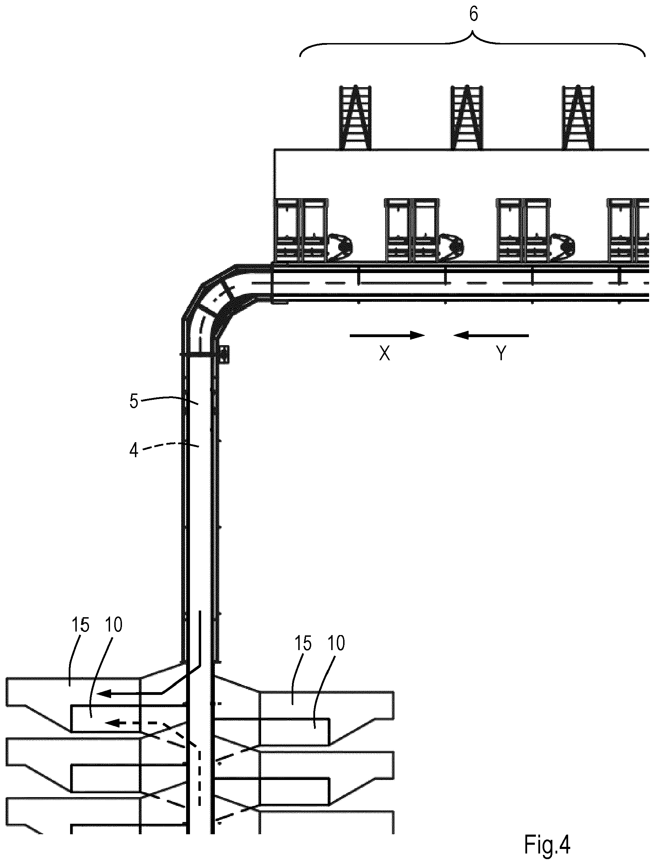

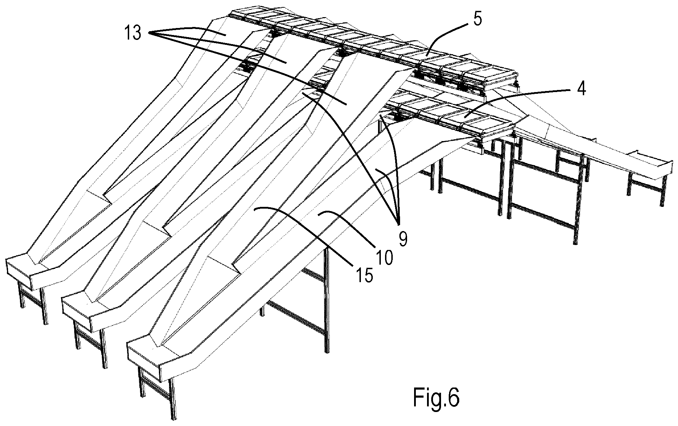

The number of lower chutes 10 and upper chutes 15 at the first lower output 8, the second lower output 9, the first upper output 13 and the second upper output 14 are substantially equal. Fig. 4 shows some of the lower and upper chutes 10, 15 at the second lower output 9 and the first upper output 13, respectively, in greater detail. It can be seen that one of the upper chutes 15 and an adjacent one of the lower chutes 10 at each side of the lower and upper paths come together in downstream direction. Tracks that are followed by sorted articles are illustrated by arrows in Fig. 4. Fig. 6 shows the upper and lower chutes 10, 15 at the second lower output 9 and the first upper output 13.

The sorting system 1 is provided with a pre-sorter (not shown) which is configured to supply articles to the lower and upper sorter units 4, 5 at the second lower and upper inputs 7, 12, respectively, which articles are destined for the second lower and upper outputs 9, 14, respectively, only. The pre-sorter may comprise an algorithm in a controller (not shown) for controlling the sorting system 1. The algorithm defines that an article which is supplied to a lower sorter unit 4 at the second lower input 7 must be discharged at the second lower output 9. Similarly, it may define that an article which is supplied to an upper sorter unit 5 at the second upper input 12 must be discharged at the second upper output 14.

Fig. 1 shows that the second lower output 9 is located at the first upper output 13 and the first lower output 8 is located at the second upper output 14.

Fig. 1 also shows that the first lower and upper inputs 6, 11 are located between the second lower output 9 and the first upper output 13, on the one hand, and the first lower output 8 and the second upper output 14, on the other hand, as seen from above. Similarly, the second lower and upper inputs 7, 12 are located between the second lower output 9 and the first upper output 13, on the one hand, and the first lower output 8 and the second upper output 14, on the other hand, as seen from above. From this point of view the first lower and upper inputs 6, 11 are located at substantially the same location along the upper and lower paths, and the second lower and upper inputs 7, 12 are located at substantially the same location along the upper and lower paths, although there may be a small shift in horizontal direction.

In more general terms, the sorting system 1 has four sections as seen from above: a first input section including the first lower and upper inputs 6, 11, a second input section including the second lower and upper inputs 7, 12, a first output section including the first lower output and the second upper output 8, 14, a second output section including the second lower output and the first upper output 9, 13, wherein the first input section, the first output section, the second input section and the second output section are successively located behind each other in circumferential direction, in Fig. 1 in clockwise direction. The four sections form four sides of a rectangle.

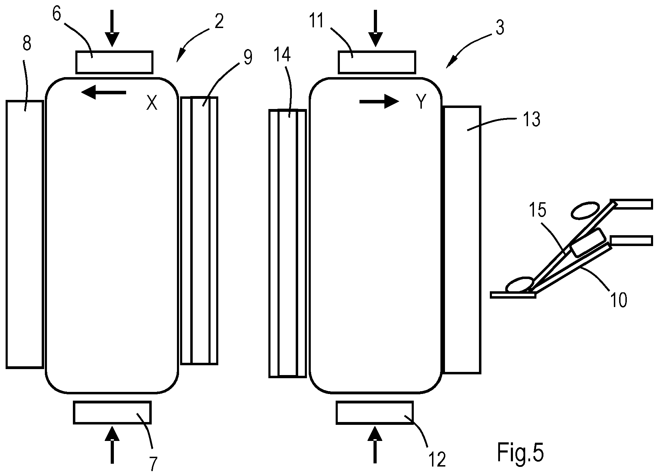

The functioning of the sorting system 1 is illustrated by means of a schematic drawing of another embodiment as shown in Fig. 5. The reference numbers in Fig. 5 correspond to the reference numbers in Figs. 1-4 and are used for indicating similar elements. Article flows through the sorting system 1 are shown by arrows. In this embodiment the lower transport direction X and the upper transport direction Y are opposite to the embodiment as shown in Figs. 1-4, which means that the first and second lower outputs 8, 9 as well as the first and second upper outputs 13, 14 are located at different sides of the rectangularly-shaped upper and lower paths. Under operating conditions articles are supplied to the lower sorter units 4 at the first lower input 6. These articles are not pre-sorted and are intended to be removed from the lower sorter units 4 at both the first lower output 8 and the second lower output 9. In practice, substantially half of the articles supplied at the first lower input 6 may be discharged at the first lower output 8 and substantially another half at the second lower output 9. Nevertheless, it is also possible that sometimes an article remains at one of the lower sorter units 4 after leaving the second lower output 9 and runs another loop.

The emptied lower sorter units 4 arriving at the second lower input 7 are provided there with pre-sorted articles, which means that these articles are intended to be removed from the lower sorter units 4 at the second lower output 9 only. Hence, substantially half of the articles supplied at the first lower input 6 and substantially all of the pre-sorted articles may be discharged at the second lower output 9. This means that at the lower path more articles are discharged at the second lower output 9 than at the first lower output 8.

A similar process occurs at the upper sorter 3. Under operating conditions articles are supplied to the upper sorter units 5 at the first upper input 11. These articles are not pre-sorted and are intended to be removed from the upper sorter units 5 at both the first upper output 13 and the second upper output 14. In practice, substantially half of the articles supplied at the first upper input 11 may be discharged at the first upper output 13 and substantially another half at the second upper output 14. Nevertheless, it is also possible that sometimes an article remains at one of the upper sorter units 5 after leaving the second upper output 14 and runs another loop.

The emptied upper sorter units 5 arriving at the second upper input 12 are provided with pre-sorted articles, which means that these articles are intended to be removed from the upper sorter units 5 at the second upper output 14 only. Hence, substantially half of the articles supplied at the first upper input 11 and substantially all of the pre-sorted articles may be discharged at the second upper output 14. This means that at the upper path more articles are discharged at the second upper output 14 than at the first upper output 13.

The relatively small number of articles discharged at the first upper output 13 may be compensated by the relatively high number of articles discharged at the second lower output 9, whereas the relatively small number of articles discharged at the first lower output 8 may be compensated by the relatively high number of articles discharged at the second upper output 14. Hence, in total the number of articles discharged at the combination of the first lower output 8 and the second upper output 14 may be the same as the number of articles discharged at the combination of the first upper output 13 and the second lower output 9. The rightmost picture in Fig. 5 illustrates that the lower chutes 10 have a smaller angle with the horizontal than the upper chutes 15.

The invention is not limited to the embodiments shown in the drawings and described hereinbefore, which may be varied in different manners within the scope of the claims.

## Claims

1. A sorting system (1) for sorting articles, comprising
a lower sorter (2) including a plurality of lower sorter units (4) for supporting articles, which lower sorter units (4) are drivable along a loop-shaped lower path in a lower transport direction (X),
an upper sorter (3) including a plurality of upper sorter units (5) for supporting articles, which upper sorter units (5) are drivable along a loop-shaped upper path in an upper transport direction (Y), wherein the upper path extends above the lower path,
wherein the lower sorter (2) is provided with a first lower input (6) and a second lower input (7) where articles are supplied to the lower sorter units (4) under operating conditions, wherein the first and second lower inputs (6, 7) are located at a distance from each other along the lower path, a first lower output (8) and a second lower output (9) where articles are selectively removable from the lower sorter units (4), the first lower output (8) being located downstream of the first lower input (6) and upstream of the second lower input (7), the second lower output (9) being located downstream of the second lower input (7) and upstream of the first lower input (6),
wherein the upper sorter (3) is provided with a first upper input (11) and a second upper input (12) where articles are supplied to the upper sorter units (5) under operating conditions, wherein the first and second upper inputs (11, 12) are located at a distance from each other along the upper path, a first upper output (13) and a second upper output (14) where articles are selectively removable from the upper sorter units (5), the first upper output (13) being located downstream of the first upper input (11) and upstream of the second upper input (12), the second upper output (14) being located downstream of the second upper input (12) and upstream of the first upper input (11),
a pre-sorter being configured to supply articles to the lower and upper sorter units (4, 5) at the second lower and upper inputs (7, 12), which pre-sorted articles are destined for the second lower and upper outputs (9, 14), respectively, substantially only,
wherein the second lower output (9) is located at the first upper output (13) and the first lower output (8) is located at the second upper output (14).

2. A sorting system (1) according to claim 1, wherein the upper transport direction (Y) is opposite to the lower transport direction (X).

3. A sorting system (1) according to claim 2, wherein the first upper and lower inputs (6, 11) are located at substantially the same location along the upper and lower paths, and/or the second upper and lower inputs (7, 12) are located at substantially the same location along the upper and lower paths.

4. A sorting system (1) according to any one of the preceding claims, wherein the sorting system (1) has four sections as seen from above: a first input section including the first lower and upper inputs (6, 11), a second input section including the second lower and upper inputs (7, 12), a first output section including the first lower output and the second upper output (8, 14), a second output section including the second lower output and the first upper output (9, 13), wherein the first input section, the first output section, the second input section and the second output section are successively located behind each other in circumferential direction.

5. A sorting system (1) according to claim 4, wherein the four sections form four sides of a rectangle.

6. A sorting system (1) according to any one of the preceding claims, wherein the first lower output (8) and the second upper output (14) and/or the second lower output (9) and the first upper output (13) are provided with discharge guides (10, 15), preferably inclined chutes, for guiding articles that are removed from the lower and upper sorter units (4, 5), respectively.

7. A sorting system (1) according to claim 6, wherein the number of discharge guides (10, 15) of the first lower output (8), the second lower output (9), the first upper output (13) and the second upper output (14) are substantially equal.

8. A sorting system (1) according to claim 6 or 7, wherein the discharge guides (10, 15) extend in transverse direction of the lower and upper paths, respectively, at at least one side of the lower and upper paths, wherein the discharge guides (10) cooperating with the lower path and the discharge guides (15) cooperating with the upper path are located alternatingly behind each other along the lower and upper paths.

9. A method of operating the sorting system (1) according to any one of the claims 1-8,
wherein a first series of articles to be sorted is supplied to the lower sorter units (4) at the first lower input (6), wherein a part of the first series of articles is removed from the lower sorter units (4) at the first lower output (8) and substantially a remainder of the first series of articles is removed from the lower sorter units (4) at the second lower output (9),
wherein a second series of articles to be sorted is supplied to empty lower sorter units (4) at the second lower input (9), wherein substantially all articles of the second series of articles are removed from the lower sorter units (4) at the second lower output (9),
wherein a third series of articles to be sorted is supplied to the upper sorter units (5) at the first upper input (11), wherein a part of the third series of articles is removed from the upper sorter units (5) at the first upper output (13) and substantially a remainder of the third series of articles is removed from the upper sorter units (5) at the second upper output (14),
wherein a fourth series of articles to be sorted is supplied to empty upper sorter units (5) at the second upper input (12), wherein substantially all articles of the fourth series of articles are removed from the upper sorter units (5) at the second upper output (14).

10. A method according to claim 9, wherein the part of the first series of articles which is removed from the lower sorter units (4) at the first lower output (8) is about a half of the first series and the part of the third series of articles which is removed from the upper sorter units (5) at the first upper output (13) is about a half of the third series.

## Patentansprüche

1. Sortiersystem (1) zum Sortieren von Artikeln, das aufweist:
einen unteren Sortierer (2) mit mehreren unteren Sortiereinheiten (4) zum Stützen von Artikeln, wobei die unteren Sortiereinheiten (4) entlang eines schleifenförmigen unteren Wegs in einer unteren Transportrichtung (X) antreibbar sind,
einen oberen Sortierer (3) mit mehreren oberen Sortiereinheiten (5) zum Stützen von Artikeln, wobei die oberen Sortiereinheiten (5) entlang eines schleifenförmigen oberen Wegs in einer oberen Transportrichtung (Y) antreibbar sind, wobei sich der obere Weg über dem unteren Weg erstreckt,
wobei der untere Sortierer (2) versehen ist mit einem ersten unteren Eingang (6) und einem zweiten unteren Eingang (7), an denen Artikel den unteren Sortiereinheiten (4) unter Betriebsbedingungen zugeführt werden, wobei der erste und zweite untere Eingang (6, 7) in einem Abstand voneinander entlang des unteren Wegs liegen, einem ersten unteren Ausgang (8) und einem zweiten unteren Ausgang (9), an denen Artikel von den unteren Sortiereinheiten (4) selektiv entfernbar sind, wobei der erste untere Ausgang (8) dem ersten unteren Eingang (6) nachgelagert und dem zweiten unteren Eingang (7) vorgelagert liegt, der zweite untere Ausgang (9) dem zweiten unteren Eingang (7) nachgelagert und dem ersten unteren Eingang (6) vorgelagert liegt,
wobei der obere Sortierer (3) versehen ist mit einem ersten oberen Eingang (11) und einem zweiten oberen Eingang (12), an denen Artikel den oberen Sortiereinheiten (5) unter Betriebsbedingungen zugeführt werden, wobei der erste und zweite obere Eingang (11, 12) in einem Abstand voneinander entlang des oberen Wegs liegen, einem ersten oberen Ausgang (13) und einem zweiten oberen Ausgang (14), an denen Artikel von den oberen Sortiereinheiten (5) selektiv entfernbar sind, wobei der erste obere Ausgang (13) dem ersten oberen Eingang (11) nachgelagert und dem zweiten oberen Eingang (12) vorgelagert liegt, der zweite obere Ausgang (14) dem zweiten oberen Eingang (12) nachgelagert und dem ersten oberen Eingang (11) vorgelagert liegt,
einen Vorsortierer, der so konfiguriert ist, dass er Artikel den unteren und oberen Sortiereinheiten (4, 5) am zweiten unteren und oberen Eingang (7, 12) zuführt, wobei vorsortierte Artikel im Wesentlichen nur für den zweiten unteren bzw. oberen Ausgang (9, 14) bestimmt sind,
wobei der zweite untere Ausgang (9) am ersten oberen Ausgang (13) liegt und der erste untere Ausgang (8) am zweiten oberen Ausgang (14) liegt.

2. Sortiersystem (1) nach Anspruch 1, wobei die obere Transportrichtung (Y) entgegengesetzt zur unteren Transportrichtung (X) ist.

3. Sortiersystem (1) nach Anspruch 2, wobei der erste obere und untere Eingang (6, 11) im Wesentlichen an derselben Stelle entlang des oberen und unteren Wegs liegen und/oder der zweite obere und untere Eingang (7, 12) im Wesentlichen an derselben Stelle entlang des oberen und unteren Wegs liegen.

4. Sortiersystem (1) nach einem der vorstehenden Ansprüche, wobei das Sortiersystem von oben gesehen vier Teilstücke hat: ein erstes Eingangsteilstück mit dem ersten unteren und oberen Eingang (6, 11), ein zweites Eingangsteilstück mit dem zweiten unteren und oberen Eingang (7, 12), ein erstes Ausgangsteilstück mit dem ersten unteren Ausgang und dem zweiten oberen Ausgang (8, 14), ein zweites Ausgangsteilstück mit dem zweiten unteren Ausgang und dem ersten oberen Ausgang (9, 13), wobei das erste Eingangsteilstück, das erste Ausgangsteilstück, das zweite Eingangsteilstück und das zweite Ausgangsteilstück aufeinanderfolgend in Umfangsrichtung nacheinander liegen.

5. Sortiersystem (1) nach Anspruch 4, wobei die vier Teilstücke vier Seiten eines Rechtecks bilden.

6. Sortiersystem (1) nach einem der vorstehenden Ansprüche, wobei der erste untere Ausgang (8) und der zweite obere Ausgang (14) und/oder der zweite untere Ausgang (9) und der erste obere Ausgang (13) mit Abgabeführungen (10, 15), vorzugsweise geneigten Rutschen, zum Führen von Artikeln versehen sind, die von den unteren bzw. oberen Sortiereinheiten (4, 5) entfernt werden.

7. Sortiersystem (1) nach Anspruch 6, wobei die Anzahl von Abgabeführungen (10, 15) des ersten unteren Ausgangs (8), des zweiten unteren Ausgangs (9), des ersten oberen Ausgangs (13) und des zweiten oberen Ausgangs (14) im Wesentlichen gleich ist.

8. Sortiersystem (1) nach Anspruch 6 oder 7, wobei sich die Abgabeführungen (10, 15) jeweils in Querrichtung zum unteren bzw. oberen Weg an mindestens einer Seite des unteren und oberen Wegs erstrecken, wobei die Abgabeführungen (10), die mit dem unteren Weg zusammenwirken, und die Abgabeführungen (15), die mit dem oberen Weg zusammenwirken, entlang des unteren und oberen Wegs abwechselnd hintereinander liegen.

9. Verfahren zum Betreiben des Sortiersystems (1) nach einem der Ansprüche 1 bis 8,
wobei eine erste Folge zu sortierender Artikel den unteren Sortiereinheiten (4) am ersten unteren Eingang (6) zugeführt wird, wobei ein Teil der ersten Folge von Artikeln von den unteren Sortiereinheiten (4) am ersten unteren Ausgang (8) entfernt wird und im Wesentlichen ein Rest der ersten Folge von Artikeln von den unteren Sortiereinheiten (4) am zweiten unteren Ausgang (9) entfernt wird,
wobei eine zweite Folge zu sortierender Artikel den leeren unteren Sortiereinheiten (4) am zweiten unteren Eingang (9) zugeführt wird, wobei im Wesentlichen alle Artikel der zweiten Folge von Artikeln von den unteren Sortiereinheiten (4) am zweiten unteren Ausgang (9) entfernt werden,
wobei eine dritte Folge zu sortierender Artikel den oberen Sortiereinheiten (5) am ersten oberen Eingang (11) zugeführt wird, wobei ein Teil der dritten Folge von Artikeln von den oberen Sortiereinheiten (5) am ersten oberen Ausgang (13) entfernt wird und im Wesentlichen ein Rest der dritten Folge von Artikeln von den oberen Sortiereinheiten (5) am zweiten oberen Ausgang (14) entfernt wird,
wobei eine vierte Folge zu sortierender Artikel den leeren oberen Sortiereinheiten (5) am zweiten oberen Eingang (12) zugeführt wird, wobei im Wesentlichen alle Artikel der vierten Folge von Artikeln von den oberen Sortiereinheiten (5) am zweiten oberen Ausgang (14) entfernt werden.

10. Verfahren nach Anspruch 9, wobei der Teil der ersten Folge von Artikeln, der von den unteren Sortiereinheiten (4) am ersten unteren Ausgang (8) entfernt wird, etwa die Hälfte der ersten Folge beträgt und der Teil der dritten Folge von Artikeln, der von den oberen Sortiereinheiten (5) am ersten oberen Ausgang (13) entfernt wird, etwa die Hälfte der dritten Folge beträgt.

## Revendications

1. Système de tri (1) pour trier des articles, comprenant une trieuse inférieure (2) comportant une pluralité d'unités trieuses inférieures (4) pour supporter des articles, lesquelles unités trieuses inférieures (4) peuvent être entraînées le long d'un chemin inférieur en forme de boucle dans une direction de transport inférieure (X),
une trieuse supérieure (3) comportant une pluralité d'unités trieuses supérieures (5) pour supporter des articles, lesquelles unités trieuses supérieures (5) peuvent être entraînées le long d'un chemin supérieur en forme de boucle dans une direction de transport supérieure (Y), dans lequel le chemin supérieur s'étend au-dessus du chemin inférieur,
dans lequel la trieuse inférieure (2) est dotée d'une première entrée inférieure (6) et d'une seconde entrée inférieure (7) où des articles sont fournis aux unités trieuses inférieures (4) dans des conditions de fonctionnement, dans lequel les première et seconde entrées inférieures (6, 7) sont situées à une distance l'une de l'autre le long du chemin inférieur, d'une première sortie inférieure (8) et d'une seconde sortie inférieure (9) où des articles peuvent être retirés sélectivement des unités trieuses inférieures (4), la première sortie inférieure (8) étant située en aval de la première entrée inférieure (6) et en amont de la seconde entrée inférieure (7), la seconde sortie inférieure (9) étant située en aval de la seconde entrée inférieure (7) et en amont de la première entrée inférieure (6),
dans lequel la trieuse supérieure (3) est dotée d'une première entrée supérieure (11) et d'une seconde entrée supérieure (12) où des articles sont fournis aux unités trieuses supérieures (5) dans des conditions de fonctionnement, dans lequel les première et seconde entrées supérieures (11, 12) sont situées à une distance l'une de l'autre le long du chemin supérieur, d'une première sortie supérieure (13) et d'une seconde sortie supérieure (14) où des articles peuvent être retirés sélectivement des unités trieuses supérieures (5), la première sortie supérieure (13) étant située en aval de la première entrée supérieure (11) et en amont de la seconde entrée supérieure (12), la seconde sortie supérieure (14) étant située en aval de la seconde entrée supérieure (12) et en amont de la première entrée supérieure (11),
une pré-trieuse étant configurée pour fournir des articles aux unités trieuses inférieure et supérieure (4, 5) aux secondes entrées inférieure et supérieure (7, 12), lesquels articles prétriés sont destinés aux secondes sorties inférieure et supérieure (9, 14), respectivement, sensiblement uniquement,
dans lequel la seconde sortie inférieure (9) est située à la première sortie supérieure (13) et la première sortie inférieure (8) est située à la seconde sortie supérieure (14) .

2. Système de tri (1) selon la revendication 1, dans lequel la direction de transport supérieure (Y) est opposée à la direction de transport inférieure (X).

3. Système de tri (1) selon la revendication 2, dans lequel les premières entrées supérieure et inférieure (6, 11) sont situées sensiblement au même emplacement le long des chemins supérieur et inférieur, et/ou les secondes entrées supérieure et inférieure (7, 12) sont situées sensiblement au même emplacement le long des chemins supérieur et inférieur.

4. Système de tri (1) selon l'une quelconque des revendications précédentes, dans lequel le système de tri (1) a quatre sections telles que vues du dessus : une première section d'entrée comportant les premières entrées inférieure et supérieure (6, 11), une seconde section d'entrée comportant les secondes entrées inférieure et supérieure (7, 12), une première section de sortie comportant la première sortie inférieure et la seconde sortie supérieure (8, 14), une seconde section de sortie comportant la seconde sortie inférieure et la première sortie supérieure (9, 13), dans lequel la première section d'entrée, la première section de sortie, la seconde section d'entrée et la seconde section de sortie sont successivement situées les unes derrière les autres dans une direction circonférentielle.

5. Système de tri (1) selon la revendication 4, dans lequel les quatre sections forment quatre côtés d'un rectangle.

6. Système de tri (1) selon l'une quelconque des revendications précédentes, dans lequel la première sortie inférieure (8) et la seconde sortie supérieure (14) et/ou la seconde sortie inférieure (9) et la première sortie supérieure (13) sont dotées de guides de déchargement (10, 15), de préférence de glissières inclinées, pour guider des articles qui sont retirés des unités trieuses inférieure et supérieure (4, 5), respectivement.

7. Système de tri (1) selon la revendication 6, dans lequel le nombre de guides de déchargement (10, 15) de la première sortie inférieure (8), la seconde sortie inférieure (9), la première sortie supérieure (13) et la seconde sortie supérieure (14) est sensiblement égal.

8. Système de tri (1) selon la revendication 6 ou 7, dans lequel les guides de déchargement (10, 15) s'étendent dans une direction transversale des chemins inférieur et supérieur, respectivement, au niveau d'au moins un côté des chemins inférieur et supérieur, dans lequel les guides de déchargement (10) coopérant avec le chemin inférieur et les guides de déchargement (15) coopérant avec le chemin supérieur sont situés en alternance les uns derrière les autres le long des chemins inférieur et supérieur.

9. Procédé de fonctionnement du système de tri (1) selon l'une quelconque des revendications 1 à 8,
dans lequel une première série d'articles devant être triés est fournie aux unités trieuses inférieures (4) à la première entrée inférieure (6), dans lequel une partie de la première série d'articles est retirée des unités trieuses inférieures (4) à la première sortie inférieure (8) et sensiblement un reste de la première série d'articles est retiré des unités trieuses inférieures (4) à la seconde sortie inférieure (9),
dans lequel une deuxième série d'articles devant être triés est fournie pour vider des unités trieuses inférieures (4) à la seconde entrée inférieure (9), dans lequel sensiblement tous les articles de la deuxième série d'articles sont retirés des unités trieuses inférieures (4) à la seconde sortie inférieure (9),
dans lequel une troisième série d'articles devant être triés est fournie aux unités trieuses supérieures (5) à la première sortie supérieure (11), dans lequel une partie de la troisième série d'articles est retirée des unités trieuses supérieures (5) à la première sortie supérieure (13) et sensiblement un reste de la troisième série d'articles est retiré des unités trieuses supérieures (5) à la seconde sortie supérieure (14),
dans lequel une quatrième série d'articles devant être triés est fournie pour vider des unités trieuses supérieures (5) à la seconde entrée supérieure (12), dans lequel sensiblement tous les articles de la quatrième série d'articles sont retirés des unités trieuses supérieures (5) à la seconde sortie supérieure (14).

10. Procédé selon la revendication 9, dans lequel la partie de la première série d'articles qui est retirée des unités trieuses inférieures (4) à la première sortie inférieure (8) est environ une moitié de la première série et la partie de la troisième série d'articles qui est retirée des unités trieuses supérieures (5) à la première sortie supérieure (13) est environ une moitié de la troisième série.
